# EUROPÄISCHE PATENTSCHRIFT

(11) **EP 2 771 923 B1**
(45) Veröffentlichungstag und Bekanntmachung des Hinweises auf die Patenterteilung: **12.04.2017**
(21) Anmeldenummer: 12787660.5
(22) Anmeldetag: 16.10.2012
(51) Int. Cl.: H01M 2/06, H01M 2/30

(54) **ANSCHLUSSPOL FÜR EINEN AKKUMULATOR, AKKUMULATORGEHÄUSE UND MASCHINE ZUR HERSTELLUNG EINES ANSCHLUSSPOLS**
CONNECTING POLE FOR A RECHARGEABLE BATTERY, RECHARGEABLE BATTERY HOUSING AND MACHINE FOR PRODUCING A CONNECTING POLE
PÔLE DE CONNEXION POUR UN ACCUMULATEUR, BOÎTIER D'ACCUMULATEUR ET MACHINE DESTINÉE À FABRIQUER UN PÔLE DE CONNEXION

(30) Priorität: 25.10.2011 DE 102011054773
(43) Veröffentlichungstag der Anmeldung: 03.09.2014
(73) Patentinhaber: Johnson Controls Autobatterie GmbH & Co. KGaA, 30419 Hannover (DE)
(72) Erfinder: LEDOUX, Anne-Laure, 30855 Langenhagen (DE); STREUER, Peter, 30559 Hannover (DE)
(74) Vertreter: Trinks, Ole
(86) Internationale Anmeldenummer: PCT/EP2012/070440
(87) Internationale Veröffentlichungsnummer: WO 2013/060596

(56) Entgegenhaltungen:
- EP-A2- 1 768 201
- DE-A1-102010 010 772
- US-A1- 2003 224 248
- US-B1- 6 644 084

## Beschreibung

Die Erfindung betrifft einen Anschlusspol für einen Akkumulator gemäß dem Oberbegriff des Anspruchs 1. Die Erfindung betrifft ferner ein Akkumulatorgehäuse oder ein Teil davon mit wenigstens einem derartigen Anschlusspol sowie ein Verfahren zur Herstellung eines derartigen Anschlusspols gemäß dem Anspruch 6.

Anschlusspole für Akkumulatoren dienen zur elektrischen Kontaktierung des Akkumulators mit elektrischen Einrichtungen, die von dem Akkumulator mit Strom versorgt werden sollen. Im Falle einer Starterbatterie für ein Kraftfahrzeug werden an zwei Anschlusspole der Starterbatterie die entsprechenden Polklemmen geschraubt.

Ein Anschlusspol für einen Akkumulator ist aus der DE 42 41 393 C2 bekannt. Der dortige Anschlusspol weist ein Sockelteil mit umlaufenden Rillen auf, das in einem Gehäuse des Akkumulators einsetzbar ist. Die umlaufenden Rillen bilden zusammen mit einem die Rillen ausfüllenden Kunststoff eine Labyrinthdichtung.

Die Druckschriften DE 10 2010 010 772 A1 und EP 1 768 201 A2 betreffen jeweils einen Anschlusspol für einen Akkumulator. Die aus diesem Stand der Technik bekannten Anschlusspole weisen jeweils einen Befestigungsabschnitt mit einem Labyrinthabschnitt auf, wobei im Labyrinthabschnitt mehrere umlaufende Vorsprünge ausgebildet sind. Diese umlaufenden Vorsprünge weisen jeweils ein hakenförmiges Profil auf.

Der Erfindung liegt die Aufgabe zu Grunde, einen Anschlusspol, der zur Bildung einer Labyrinthdichtung mit dem Kunststoff geeignet ist, anzugeben, der einfacher und kostengünstiger herzustellen ist.

Diese Aufgabe wird durch die in den Ansprüchen 1 und 6 angegebene Erfindung gelöst. Die Unteransprüche geben vorteilhafte Ausgestaltungen der Erfindung an.

Gemäß Anspruch 1 wird ein Anschlusspol für einen Akkumulator insbesondere mit folgenden Merkmalen vorgeschlagen:
a) der Anschlusspol weist einen Anschlussabschnitt auf, in dem eine Polklemme am Anschlusspol befestigbar ist,
b) der Anschlusspol weist einen Befestigungsabschnitt auf, in dem der Anschlusspol in einem Gehäuseteil des Akkumulators befestigbar ist,
c) der Befestigungsabschnitt weist einen Labyrinthabschnitt auf,
d) die Außenwand des Anschlusspols weist im Labyrinthabschnitt einen oder mehrere umlaufende Vorsprünge auf,
e) wenigstens zwei benachbart zueinander angeordnete umlaufende Vorsprünge sind paarweise in aufeinander zu weisender Richtung umgebördelt, wobei durch den umgebördelten Bereich ein jeweiliger Hinterschnitt an dem umlaufenden Vorsprung in Bezug auf die Außenwand des Anschlusspols gebildet ist.

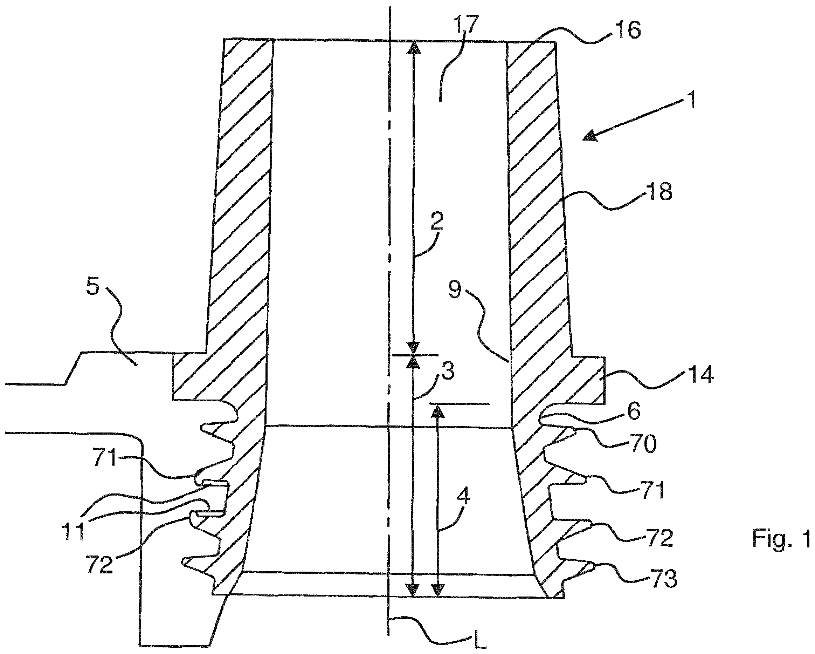

Der Begriff "Abschnitt" bezieht sich dabei auf Abschnitte in Längsrichtung des Anschlusspols, d. h . in Richtung der in Figur 1 dargestellten Längsachse L.

Die Erfindung hat den Vorteil, dass ein Anschlusspol mit einem Labyrinthabschnitt angegeben werden kann, dessen umlaufende Vorsprünge mit einfacheren und damit kostengünstigeren Herstellschritten herstellbar sind. Während es bei dem eingangs genannten Anschlusspol erforderlich ist, die Vorsprünge mit dem hakenförmigen Profil z. B. durch Rollieren bzw. Walzen der entsprechenden Bereiche des Anschlusspols herzustellen, kann beim erfindungsgemäßen Anschlusspol auf solche aufwendigen Maßnahmen verzichtet werden. Somit können einfachere und kostengünstigere Werkzeuge verwendet werden, insbesondere ein Bördelwerkzeug zum paarweisen Umbördeln zweier benachbart angeordneter umlaufender Vorsprünge aufeinander zu. Dadurch, dass jeweils zwei umlaufende Vorsprünge paarweise aufeinander zu umgebördelt werden, kann das Bördelwerkzeug im Wesentlichen längskraftfrei betrieben werden, da sich die entsprechenden Bördelkräfte im Wesentlichen gegeneinander aufheben. Zudem wird gegenüber dem bekannten Herstellverfahren auch Zeit bei der Herstellung des Anschlusspols gespart. All dies führt zu geringeren Herstellungskosten. Hierdurch können auf einfache Weise Hinterschnitte an der Außenwand des Anschlusspols hergestellt werden, die nach Einbettung des Anschlusspols in das Spritzgießmaterial des Akkumulatorgehäuses eine optimale Sperre gegen den Durchtritt von Säure aus dem Akkumulator bilden.

Der umgebördelte Bereich des umlaufenden Vorsprungs kann gleichmäßig umgebördelt oder ungleichmäßig umgebördelt sein, z. B. wellenförmig. Besonders günstig ist ein gleichmäßig umgebördelter Bereich des umlaufenden Vor-Sprungs, der einen durchgehenden Ring um die Außenwand des Anschlusspols bildet.

Die Erfindung kann vorteilhaft sowohl bei einem Anschlusspol für eine PKW-Batterie als auch für einen Anschlusspol einer NKW-Batterie (für Nutzfahrzeuge) realisiert werden.

Der bzw. die umlaufenden Vorsprünge im Labyrinthabschnitt können grundsätzlich mit unterschiedlichen Profilen realisiert sein. Als Grundform für den umlaufenden Vorsprung sei eine ringartige Form genannt. Einer oder mehrere der umlaufenden Vorsprünge können auch ein hakenförmiges Profil aufweisen.

Gemäß der Erfindung ist durch das Umbördeln nur ein einziger Hinterschnitt pro umlaufendem Vorsprung erzeugt, d. h. es ergibt sich ein unsymmetrisches Profil des umlaufenden Vorsprungs. Dies ist herstellungs-technisch besonders günstig zu realisieren.

Für die kostengünstige Herstellung des Anschlusspols ist es günstig, die umlaufenden Vorsprünge zunächst ohne Hinterschnitte herzustellen. Gemäß einer vorteilhaften Weiterbildung der Erfindung ist daher vorgesehen, dass die wenigstens zwei benachbart zueinander angeordneten umlaufenden Vorsprünge im Übrigen hinterschnittfrei sind, d. h. abgesehen von dem umgebördelten Bereich. Dies erlaubt eine einfache und schnelle Herstellung des Anschlusspols aus einem z.B. zylinderförmigen oder rohrförmigen Rohling des Anschlusspols, in den in einem Fließpressschritt die umlaufenden Vorsprünge zunächst hinterschnittfrei eingebracht werden. Der Anschlusspol kann auch in einem Gießverfahren mit zunächst hinterschnittfreien umlaufenden Vorsprüngen hergestellt werden. Anschließend können durch einen Bördelschritt wenigstens zwei benachbart zueinander angeordnete umlaufende Vorsprünge paarweise in aufeinander zu weisender Richtung umgebördelt werden, wodurch dort ein jeweiliger Hinterschnitt gebildet wird.

Gemäß einer vorteilhaften Weiterbildung der Erfindung sind ein oder zwei weitere umlaufende Vorsprünge in dem Labyrinthabschnitt angeordnet. Das Vorsehen des einen oder der zwei weiteren umlaufenden Vorsprünge hat den Vorteil, dass die Dichtwirkung des Labyrinths verbessert wird. Es hat sich gezeigt, dass eine zu hohe Zahl von umlaufenden Vorsprüngen zu keiner weiteren Verbesserung führt, sondern nur die Herstellkosten erhöht und die Stabilität der umlaufenden Vorsprünge reduziert. Es ist günstig, wenn der Abstand zwischen zwei benachbarten umlaufenden Vorsprüngen bei einem Anschlusspol üblicher Bauart im Bereich von 0,8 bis 2 mm liegt, wobei sich ein Wert von ca. 1,5 mm als optimal herausgestellt hat. Die Abstände sollten nicht zu groß sein, um eine sichere und robuste Einbettung des Anschlusspols in dem Material des Gehäuseteils sicherzustellen. Zu kleine Abstände verschlechtern den Füllgrad der zwischen den umlaufenden Vorsprüngen gebildeten Nuten mit dem Spritzgießmaterial des Gehäuseteils, insbesondere wenn als Material Polypropylen (PP) verwendet wird. Zu geringe Abstände zwischen den umlaufenden Vorsprüngen sind hierbei ungünstig für den Einfließvorgang des Spritzgießmaterials in die Nuten.

Gemäß einer vorteilhaften Weiterbildung der Erfindung weist der Anschlusspol in dem Befestigungsabschnitt zwischen dem Anschlussabschnitt und dem Labyrinthabschnitt einen umlaufenden Vorsprung mit einer Verzahnung am Außenumfang auf. Mittels der Verzahnung kann vorteilhaft eine Verdrehsicherung realisiert werden, die ein unerwünschtes Verdrehen des Anschlusspols in dem Material des Akkumulatorgehäuses verhindert. In einer vorteilhaften Weiterbildung der Erfindung weist die Verzahnung eine Anzahl von Zähnen im Bereich von 6 bis 9 auf. Insbesondere hat sich gezeigt, dass eine Anzahl von 8 Zähnen besonders vorteilhaft ist und einen guten Kompromiss zwischen der mechanischen Stabilität der Zähne des Anschlusspols und der Haltbarkeit des Anschlusspols in dem Kunststoffmaterial des Akkumulatorgehäuses ergibt. Eine zu hohe Anzahl von Zähnen führt zwangsläufig zu einer Verkleinerung der Abmessungen der einzelnen Zähne, wodurch die Stabilität der einzelnen Zähne abnimmt. Eine zu geringe Anzahl an Zähnen führt zu einer Abnahme der Wirksamkeit des Verdrehschutzes, da die Haltbarkeit des Anschlusspols im Kunststoffmaterial des Akkumulatorgehäuses abnimmt.

Die Erfindung betrifft ferner ein Akkumulatorgehäuse oder Teil davon mit wenigstens einem Anschlusspol der zuvor beschriebenen Art, wobei der wenigstens eine Anschlusspol mit seinem Befestigungsabschnitt mittels Spritzgießtechnik in einem Akkumulatorgehäuseteil eingebettet ist.

Ferner betrifft die Erfindung eine Maschine zur Herstellung eines Anschlusspols der zuvor beschriebenen Art. Die Maschine ist dazu eingerichtet, an einem Rohling durch wenigstens einen Fließpressschritt in dem Befestigungsabschnitt an der Außenwand des Anschlusspols einen Labyrinthabschnitt mit einem oder mehreren umlaufenden Vorsprüngen anzuformen. Ein solcher Fließpressschritt kann mit einfacheren Werkzeugen und höherer Verarbeitungsgeschwindigkeit durchgeführt werden als der eingangs erwähnte Rollierschritt.

Der genannte Rohling kann z. B. zylinderförmig, kegelstumpfförmig oder rohrförmig sein, d. h. bereits einen inneren Hohlraum aufweisen. Sofern der Rohling noch keinen inneren Hohlraum aufweist, wie z. B. im Falle eines massiven Zylinders oder Kegelstumpfes, ist die Maschine vorteilhafterweise dazu eingerichtet, in einem ersten Fließpressschritt z. B. mit einem dünnen Dorn zunächst einen kleinen zentralen Hohlraum in dem Rohling einzuformen. Die Maschine ist ferner dazu eingerichtet, in einem zweiten Fließpressschritt mit einem größeren Dorn den bereits hergestellten kleinen Hohlraum aufzuweiten, der hierbei zugleich als Zentrierung dient. In dem zweiten Fließpressschritt kann dann zugleich die Anformung der umlaufenden Vorsprünge erfolgen.

Gemäß einer vorteilhaften Weiterbildung der Erfindung ist die Maschine dazu eingerichtet, in einem nachfolgenden Bördelschritt wenigstens zwei benachbart zueinander angeordnete umlaufende Vorsprünge paarweise in aufeinander zu weisender Richtung umzubördeln.

Der Anschlusspol kann alternativ auch in einem Gießverfahren hergestellt werden. In diesem Fall ist die Maschine ist dazu eingerichtet, durch ein Gießverfahren einen Anschlusspol mit einem Labyrinthabschnitt mit einem oder mehreren umlaufenden Vorsprüngen an der Außenwand des Anschlusspols zu formen.

Die Erfindung wird nachfolgend anhand von Ausführungsbeispielen unter Verwendung von Zeichnungen näher erläutert.

Es zeigen
- Figur 1: - einen Anschlusspol in Schnittdarstellung in Längsrichtung und
- Figur 2: - eine weitere Ausführungsform eines Anschlusspols in einer Schnittdarstellung in Längsrichtung und
- Figur 3: - Ausführungsformen des Anschlusspols gemäß den Figuren 1 bis 2 in Draufsicht und
- Figur 4: - einen Akkumulator mit einem Anschlusspol in Schnittdarstellung.

In den Figuren werden gleiche Bezugszeichen für einander entsprechende Elemente verwendet.

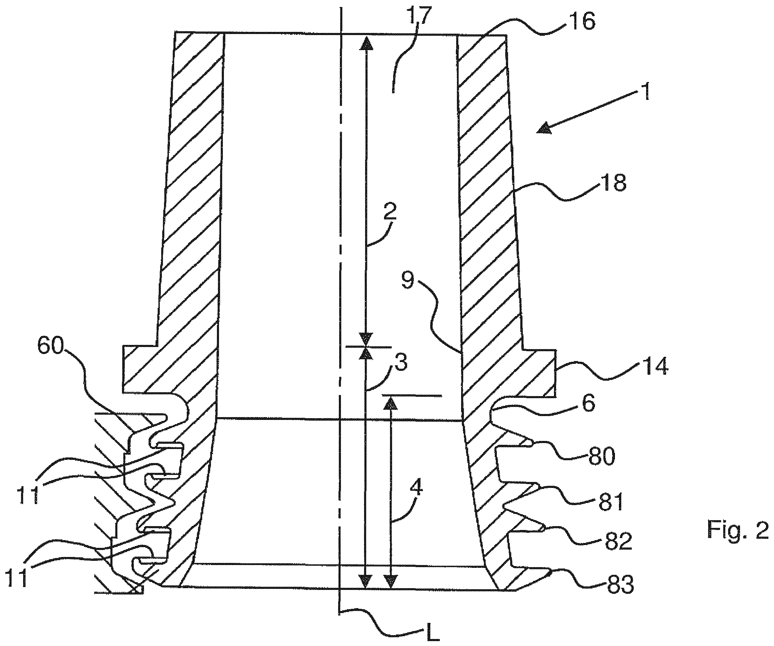

Die Figuren 1 und 2 zeigen jeweilige Ausführungsformen des Anschlusspols 1, in denen dieser auf der rechten Seite mit noch nicht umgebördelten umlaufenden Vorsprüngen dargestellt ist, d. h. in einem Zustand, wie er nach einem Gießvorgang oder Fließpressvorgang des Anschlusspols vorliegt. Auf der jeweils linken Seite in den Figuren 1 und 2 ist derselbe Anschlusspol 1 nach Durchführung des Bördelvorgangs dargestellt, d. h. mit jeweils paarweise umgebördelten umlaufenden Vorsprüngen.

Die Figur 1 zeigt einen Anschlusspol 1 in einer in Längsrichtung geschnittenen Darstellung. Der Anschlusspol 1 weist einen Anschlussabschnitt 2, einen Befestigungsabschnitt 3 und einen Labyrinthabschnitt 4 auf. Der Anschlusspol 1 weist im Anschlussabschnitt 2 an seiner Außenseite eine Außenwand 18 und eine obere Abschlussfläche 16 auf. An der Außenseite des Anschlusspols 1 ist in dem Befestigungsabschnitt 3, angrenzend an den Anschlussabschnitt 2, ein umlaufender Vorsprung 14 angeordnet, der z. B. eine Ringform aufweisen kann. Der umlaufende Vorsprung 14 kann auch die nachfolgend noch näher erläuterte Verzahnung am Außenumfang aufweisen. An den umlaufenden Vorsprung 14 schließt sich eine Außenwand 6 an der Außenseite des Anschlusspols 1 an, die in dem Labyrinthabschnitt 4 angeordnet ist. Die Außenwand 6 ist durch umlaufende Vorsprünge 70, 71, 72, 73 unterbrochen. Der Anschlusspol 1 kann, abgesehen von der Verzahnung, z. B. als ein im Wesentlichen rotationssymmetrisches Bauteil ausgebildet sein.

Wie in der Figur 1 erkennbar ist, weist der Anschlusspol 1 in dem rechts dargestellten Zwischenzustand während der Herstellung, bei der noch keine umlaufenden Vorsprünge 70, 71, 72, 73 umgebördelt sind, ein Paar von benachbart zueinander angeordneten umlaufenden Vorsprüngen 71, 72 auf, die ein unsymmetrisches Profil aufweisen und bereits leicht aufeinander zu ausgerichtet sind. Diese umlaufenden Vorsprünge 71, 72 werden dann mit einem Bördelwerkzeug, z. B. mit einem um den Anschlusspol 1 herumgeführten Rollierwerkzeug, im Nasenbereich umgebördelt, wie in der Figur 1 links wiedergegeben ist. Dort ist erkennbar, dass die umlaufenden Vorsprünge 71, 72 aufeinander zu umgebördelt sind, wodurch Bereiche 11 mit Hinterschnitt entstanden sind. In den Hinterschnitten 11 kann sich beim Einbetten des Anschlusspols in das Material des Akkumulatorgehäuses das Spritzgießmaterial sammeln, wodurch eine besonders gute Abdichtung erzielt wird. Die Figur 1 zeigt beispielhaft im linken Bereich des Anschlusspols 1 ausschnittsweise ein im Spritzgießverfahren an den Anschlusspol angeformtes Gehäuseteil 5 des Akkumulators. Wie erkennbar ist, ist der Anschlusspol 1 in dem Befestigungsabschnitt 3 an seiner Außenseite in dem Material des Gehäuseteils 5 eingebettet. Durch die umlaufenden Vorsprünge 70, 71, 72, 73 wird ein Labyrinth gebildet, das für eine gute Abdichtung des Inneren des Akkumulators gegenüber der Umgebung sorgt.

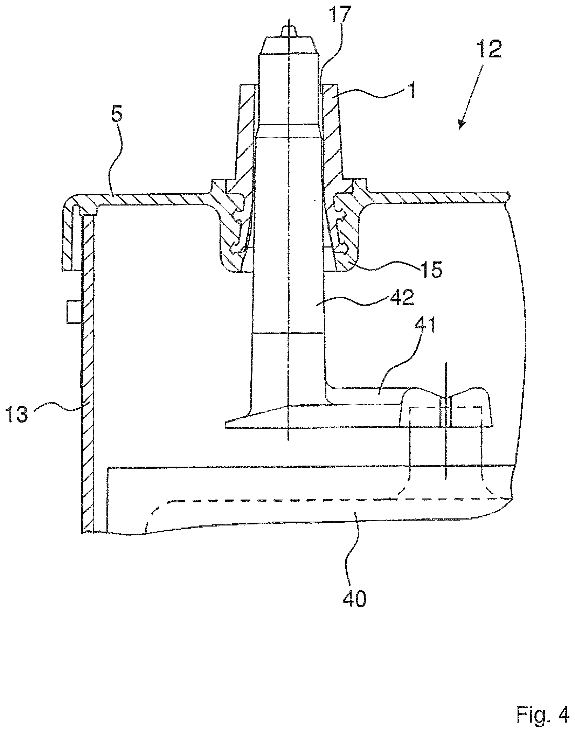

Der Anschlusspol 1 ist innen hohl ausgebildet und weist einen Hohlraum 17 auf. Der innere Hohlraum 17 dient zum Einführen eines Polschafts, wie nachfolgend noch anhand der Figur 4 beschrieben wird.

Die Figur 2 zeigt in vergleichbarer Ansicht wie die Figur 1 eine weitere Ausführungsform eines Anschlusspols 1, bei dem im Unterschied zu der Ausführungsform gemäß der Figur 1 ein erstes Paar umlaufender Vorsprünge 80, 81 und darunter ein zweites Paar umlaufender Vorsprünge 82, 83 vorgesehen ist. Die Paare 80, 81 bzw. 82, 83 sind jeweils vergleichbar wie die umlaufenden Vorsprünge 71, 72 gemäß Figur 1 ausgebildet. Wie in der Figur 2 links erkennbar ist, werden durch ein schematisch dargestelltes Bördelwerkzeug 60, z. B. in Form eines Rollierwerkzeugs, die Paare 80, 81 bzw. 82, 83 der umlaufenden Vorsprünge jeweils aufeinander zu weisend umgebördelt, wodurch insgesamt vier Bereiche 11 mit Hinterschnitten erzeugt werden.

In allen Ausführungsformen sind die durch das Umbördeln hergestellten Hinterschnitte 11 eines Paars von umlaufenden Vorsprüngen 70, 71, 72, 73, 80, 81, 82, 83 einander gegenüberliegend, d.h. sie weisen aufeinander zu.

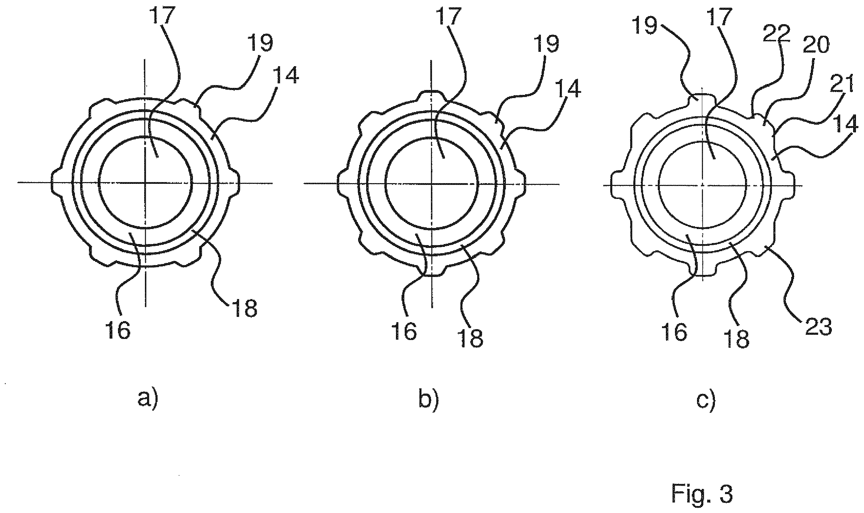

Die Figur 3 zeigt in den Figuren 3a), 3b) und 3c) verschiedene Ausführungsformen des Anschlusspols 1 in Draufsicht, und zwar von der Seite der Abschlussfläche 16. Erkennbar ist in allen drei Ausführungsformen die obere Abschlussfläche 16, die äußere Seitenwand 18, der innere Hohlraum 17 sowie der umlaufende Vorsprung 14.

Der umlaufende Vorsprung 14 weist eine äußere Verzahnung auf, die durch Zähne 19, 20, 23 dargestellt ist. Durch die Zähne 19, 20, 23 wird ein Verdrehschutz des Anschlusspols in dem Kunststoffmaterial des Akkumulatorgehäuses realisiert. Hierbei zeigt die Figur 3a) eine vorteilhafte Ausführungsform, bei der sechs Zähne 19 gleichmäßig über den Umfang des Anschlusspols 1 verteilt angeordnet sind. Die Figur 3b) zeigt eine vorteilhafte Ausführungsform mit acht über den Umfang des Anschlusspols 1 gleichmäßig verteilt angeordneten Zähnen 19.

Die Figur 3c) entspricht soweit der Ausführungsform gemäß Figur 3b), wobei bei Figur 3c) als vorteilhafte Weiterbildung Zähne 20, 23 mit unsymmetrischen Zahnflanken 21, 22 vorgesehen sind. So weist die Zahnflanke 21 bezüglich des Außenumfangs des umlaufenden Vorsprungs 14 einen geringeren Winkel auf als die Zahnflanke 22. Der Zahn 23 ist vergleichbar wie der Zahn 20 mit unsymmetrischen Zahnflanken ausgebildet. Hierbei ist der Zahn 23 spiegelsymmetrisch zu dem Zahn 20 angeordnet. Durch die mit geringerem Winkel ausgebildeten Zahnflanken 21 wird die Möglichkeit geschaffen, den Anschlusspol mittels einer Backenform herzustellen. Beim Entformen können die Backen hierdurch ohne weiteres von dem Anschlusspol getrennt werden, da in Trennrichtung kein Hinterschnitt auftritt.

Bei einem Verfahren zur Herstellung eines Anschlusspols wird an einem Rohling zunächst durch wenigstens einen Fließpressschritt in dem Befestigungsabschnitt an der Außenwand des Anschlusspols ein Labyrinthabschnitt mit einem oder mehreren umlaufenden Vorsprüngen angeformt. In einem nachfolgenden Bördelschritt, der auf den Fließpressschritt unmittelbar oder mittelbar folgt, wird eine paarweise Umbördelung von benachbart angeordneten umlaufenden Vorsprüngen aufeinander zu durchgeführt. Der Bördelschritt kann vorteilhaft mit einem umlaufenden Rolierwerkzeug 60 durchgeführt werden, das um den Anschlusspol 1 herum gerollt wird. Hierbei wird der Anschlusspol in einer Fixiereinrichtung gehalten. Dies erlaubt eine schnelle und rationelle Fertigung des erfindungsgemäßen Anschlusspols.

Der genannte Rohling kann z. B. zylinderförmig, kegelstumpfförmig oder rohrförmig sein, d. h. bereits einen inneren Hohlraum aufweisen. Sofern der Rohling noch keinen inneren Hohlraum aufweist, wie z. B. im Falle eines massiven Zylinders oder Kegelstumpfes, weist das Verfahren wenigstens zwei Fließpressschritte auf. In einem ersten Fließpressschritt wird z. B. mit einem dünnen Dorn zunächst ein kleiner zentraler Hohlraum in dem Rohling eingeformt. In einem zweiten Fließpressschritt wird dann mit einem größeren Dorn der bereits hergestellte kleine Hohlraum aufgeweitet, der hierbei zugleich als Zentrierung dient. In dem zweiten Fließpressschritt kann dann zugleich die Anformung der umlaufenden Vorsprünge erfolgen.

Der Anschlusspol 1 kann alternativ auch in einem Gießprozess hergestellt werden.

Die Figur 4 zeigt ausschnittsweise einen Akkumulator 12 mit den Gehäuseteilen Batteriekasten 13 und Deckelteil 5. Das Deckelteil 5 wird auf den Batteriekasten 13 aufgesetzt. Im Inneren des Batteriekastens 13 befinden sich Elektrodenplatten, die einen Plattensatz 40 bilden. Der Plattensatz 40 ist über einen

Verbinder 41 mit einem Polschaft 42 elektrisch und mechanisch verbunden. Wie erkennbar ist, ist der Polschaft 42 in den inneren Hohlraum 17 der Anschlussbuchse 1 eingeführt und steht auf der Außenseite des Akkumulators 12 etwas aus der im Deckelteil 5 eingebetteten Anschlussbuchse 1 hervor. Der Polschaft 42 ist in diesem Bereich mit einem etwas geringeren Durchmesser ausgeführt als in den übrigen Bereichen. Hierdurch wird ein ringförmiger Raum zwischen dem Polschaft 42 und der Anschlussbuchse 1 gebildet. Dieser Ringraum dient zur elektrischen und mechanischen Verbindung des Polschafts 42 mit der Anschlussbuchse 1, z. B. durch Verschweißen.

## Patentansprüche

1. Anschlusspol (1) für einen Akkumulator (12) mit folgenden Merkmalen:
a) der Anschlusspol (1) weist einen Anschlussabschnitt (2) auf, in dem eine Polklemme am Anschlusspol (1) befestigbar ist,
b) der Anschlusspol (1) weist einen Befestigungsabschnitt (3) auf, in dem der Anschlusspol (1) in einem Gehäuseteil (5) des Akkumulators (12) befestigbar ist,
c) der Befestigungsabschnitt (3) weist einen Labyrinthabschnitt (4) auf,
d) die Außenwand (6) des Anschlusspols (1) weist im Labyrinthabschnitt (4) einen oder mehrere umlaufende Vorsprünge (70, 71, 72, 73, 80, 81, 82, 83) auf,
**dadurch gekennzeichnet, dass**
e) wenigstens zwei benachbart zueinander angeordnete umlaufende Vorsprünge (70, 71, 72, 73, 80, 81, 82, 83) paarweise in aufeinander zu weisender Richtung umgebördelt sind, wobei durch den umgebördelten Bereich ein jeweiliger Hinterschnitt (11) an dem umlaufenden Vorsprung (70, 71, 72, 73, 80, 81, 82, 83) in Bezug auf die Außenwand (6) des Anschlusspols (1) gebildet ist,
wobei durch das Umbördeln nur ein einziger Hinterschnitt (11) je umlaufender Vorsprung (70, 71, 72, 73, 80, 81, 82, 83) erzeugt ist, wodurch sich ein unsymmetrisches Profil des umlaufenden Vorsprungs ergibt.

2. Anschlusspol nach Anspruch 1, wobei die durch das Umbördeln hergestellten Hinterschnitte (11) eines Paars von umlaufenden Vorsprüngen (70, 71, 72, 73, 80, 81, 82, 83) einander gegenüberliegend sind.

3. Anschlusspol nach Anspruch 1 oder 2, wobei oberhalb und/oder unterhalb eines Paars umgebördelter umlaufender Vorsprünge (70, 71, 72, 73, 80, 81, 82, 83) jeweils wenigstens ein nicht-umgebördelter umlaufender Vorsprung (70, 71, 72, 73, 80, 81, 82, 83) angeordnet ist.

4. Anschlusspol nach einem der vorherigen Ansprüche, wobei jeweils zwei Paare von umgebördelten umlaufenden Vorsprüngen (70, 71, 72, 73, 80, 81, 82, 83) benachbart zueinander angeordnet sind.

5. Akkumulatorgehäuse (5, 13) oder Teil (5) davon mit wenigstens einem Anschlusspol (1) nach einem der vorhergehenden Ansprüche, wobei der wenigstens eine Anschlusspol (1) mit seinem Befestigungsabschnitt (3) mittels Spritzgießtechnik in einem Akkumulatorgehäuseteil (5) eingebettet ist.

6. Verfahren zur Herstellung eines Anschlusspols (1), insbesondere eines Anschlusspols (1) nach einem der Ansprüche 1 bis 4, wobei das Verfahren die folgenden Verfahrensschritte aufweist:
a) Bereitstellen eines zylinder- oder rohrförmigen Rohlings des Anschlusspols;
b) Einbringen von wenigstens zwei benachbart zueinander angeordneten umlaufenden und hinterschnittfreien Vorsprüngen mit Hilfe eines Fließpressschnittes oder eines Gießverfahrens; und
c) Umbördeln von wenigstens zwei benachbart zueinander angeordneten umlaufenden Vorsprüngen paarweise in aufeinander zu weisender Richtung, sodass ein jeweiliger Hinterschnitt gebildet wird,
wobei durch das Umbördeln nur ein einziger Hinterschnitt (11) je umlaufender Vorsprung (70, 71, 72, 73, 80, 81, 82, 83) erzeugt wird, wodurch sich ein unsymmetrisches Profil des umlaufenden Vorsprungs ergibt.

## Claims

1. A connecting pole (1) for a rechargeable battery (12) having the following features:
a) the connecting pole (1) comprising a connecting section (12) in which a pole terminal can be attached to the connecting pole (1),
b) the connecting pole (1) comprising an attachment section (3) in which the connecting pole (1) can be attached in a housing section (5) of the rechargeable battery (12),
c) the attachment section (3) comprising a labyrinth section (4),
d) the outer wall (6) of the connecting pole (1) comprising one or more circumferential projections (70, 71, 72, 73, 80, 81, 82, 83) in the labyrinth section (4),
**characterized in that**
e) at least two adjacently arranged circumferential projections (70, 71, 72, 73, 80, 81, 82, 83) are flanged in pairs in the mutually facing direction, wherein the flanged region forms a respective undercut (11) relative to the outer wall (6) of the connecting pole (1) on each circumferential projection (70, 71, 72, 73, 80, 81, 82, 83),
wherein the flanging produces only one single undercut (11) per circumferential projection (70, 71, 72, 73, 80, 81, 82, 83), resulting in the circumferential projection exhibiting an asymmetrical profile.

2. The connecting pole according to claim 1,
wherein the undercuts (11) produced by flanging a pair of circumferential projections (70, 71, 72, 73, 80, 81, 82, 83) are disposed opposite one another.

3. The connecting pole according to claim 1 or 2,
wherein at least one non-flanged circumferential projection (70, 71, 72, 73, 80, 81, 82, 83) is in each case arranged above and/or below a pair of flanged circumferential projections (70, 71, 72, 73, 80, 81, 82, 83).

4. The connecting pole according to any one of the preceding claims,
wherein two pairs of flanged circumferential projections (70, 71, 72, 73, 80, 81, 82, 83) are adjacently arranged in each case.

5. A rechargeable battery housing (5, 13) or section (5) thereof comprising at least one connecting pole (1) according to any one of the preceding claims, wherein the at least one connecting pole (1) along with its attachment section (3) is embedded in a rechargeable battery housing section (5) by injection molding.

6. A method for manufacturing a connecting pole (1), particularly a connecting pole (1) as claimed in any one of claims 1 to 4, wherein the method comprises the following method steps:
a) preparing a cylindrical or tubular blank of the connecting pole;
b) introducing at least two adjacently arranged circumferential and non-undercut projections in an extrusion press step or casting process; and
c) flanging at least two adjacently arranged circumferential projections in the mutually facing direction in pairs so as to form a respective undercut,
wherein the flanging produces only one single undercut (11) per circumferential projection (70, 71, 72, 73, 80, 81, 82, 83), resulting in the circumferential projection exhibiting an asymmetrical profile.

## Revendications

1. Pôle de connexion (1) pour un accumulateur (12), présentant les caractéristiques suivantes:
a) le pôle de connexion (1) comprend une portion de connexion (2) dans laquelle peut être fixée une attache de pôle sur le pôle de connexion (1),
b) le pôle de connexion (1) comprend une portion de fixation (3) dans laquelle peut être fixé le pôle de connexion (1) dans une partie de boîtier (5) de l'accumulateur (12),
c) la portion de fixation (3) présente une portion en labyrinthe (4),
d) la paroi extérieure (6) du pôle de connexion (1) comprend dans la portion en labyrinthe (4) une ou plusieurs saillies périphériques (70, 71, 72, 73, 80, 81, 82, 83),
**caractérisé en ce que**
e) au moins deux saillies périphériques (70, 71, 72, 73, 80, 81, 82, 83) agencées au voisinage l'une de l'autre sont rabattues par paire dans des directions orientées l'une vers l'autre, la zone rabattue formant sur la saillie périphérique (70, 71, 72, 73, 80, 81, 82, 83) une contre-dépouille respective (11) par rapport à la paroi extérieure (6) du pôle de connexion (1),
dans lequel, pour chaque saillie périphérique (70, 71, 72, 73, 80, 81, 82, 83), une seule contre-dépouille (11) est réalisée par le rabattement, ce qui provoque un profil asymétrique de la saillie périphérique.

2. Pôle de connexion selon la revendication 1,
dans lequel les contre-dépouilles (11) réalisées par le rabattement d'une paire de saillies périphériques (70, 71, 72, 73, 80, 81, 82, 83) sont à l'opposé l'une de l'autre.

3. Pôle de connexion selon la revendication 1 ou 2,
dans lequel au-dessus et/ou au-dessous d'une paire de saillies périphériques rabattues (70, 71, 72, 73, 80, 81, 82, 83), il est prévu respectivement au moins une saillie périphérique non rabattue (70, 71, 72, 73, 80, 81, 82, 83).

4. Pôle de connexion selon l'une des revendications précédentes,
dans lequel deux paires respectives de saillies périphériques rabattues (70, 71, 72, 73, 80, 81, 82, 83) sont agencées au voisinage l'une de l'autre.

5. Boîtier d'accumulateur (5, 13) ou partie (5) de celui-ci comportant au moins un pôle de connexion (1) selon l'une des revendications précédentes, dans lequel ledit au moins un pôle de connexion (1) est noyé avec sa portion de fixation (3) par moulage par injection dans une partie (5) de boîtier d'accumulateur.

6. Procédé de réalisation d'un pôle de connexion (1), en particulier d'un pôle de connexion (1) selon l'une des revendications 1 à 4, dans lequel le procédé comprend les étapes suivantes consistant à:
a) fournir une ébauche cylindrique ou tubulaire du pôle de connexion;
b) ménager au moins deux saillies périphériques agencées au voisinage l'une de l'autre et dépourvues de contre-dépouille, à l'aide d'une d'étape d'extrusion ou d'un procédé de coulée; et
c) rabattre au moins deux saillies périphériques agencées au voisinage l'une de l'autre par paire dans des directions orientées l'une vers l'autre, de manière à former une contre-dépouille respective,
dans lequel, pour chaque saillie périphérique (70, 71, 72, 73, 80, 81, 82, 83), on réalise une seule contre-dépouille (11) par le rabattement, ce qui provoque un profil asymétrique de la saillie périphérique.
